Europäisches Patentamt

European Patent Office

Office européen des brevets

(19)

⌣ Veröffentlichungsnummer: **0 432 460 A1**

# EUROPÄISCHE PATENTANMELDUNG

(12)

(21) Anmeldenummer: 90121479.1

(22) Anmeldetag: 09.11.90

(51) Int. Cl.⁵ **A47J 31/54, F24H 1 14**

(30) Priorität: **15.12.89 DE 3941476**

(43) Veröffentlichungstag der Anmeldung:
**19.06.91 Patentblatt 91/25**

(84) Benannte Vertragsstaaten:
**AT BE CH DE DK ES FR GB GR IT LI LU NL SE**

(71) Anmelder: **MELITTA HAUSHALTSPRODUKTE
GmbH & CO. KOMMANDITGESELLSCHAFT
Ringstrasse 99
W-4950 Minden(DE)**

(72) Erfinder: **Salomon, Thomas, Dipl.-Ing.
Kranichweg 5
W-4815 Schloss Holte(DE)**

(74) Vertreter: **Stracke, Alexander, Dipl.-Ing. et al
Jöllenbecker Strasse 164
W-4800 Bielefeld 1(DE)**

(54) **Durchlauferhitzer, insbesondere für Maschinen zur Herstellung von Brühgetränken.**

(57) Bei diesem Durchlauferhitzer insbesondere für Maschinen zur Herstellung von Brühgetränken ist zur Optimierung des Wirkungsgrades eine erste Zone starker Wassererhitzung mit einem senkrechten Einlaufstück (3) mit anschließendem Krümmungsbogen (4) des Wasserrohres (1) vorgesehen. Daran schließt sich eine zweite Zone längerer Heizleistung mit Erhitzung des Wassers bis zum Siedepunkt an, und zwar in einem liegenden, zum Auslauf hin jedoch leicht ansteigenden Rohrstück (5) des Wasserrohres (1). Eine dritte Zone starker Wassererhitzung mit Dampfblasenbildung zur Erzielung des gewünschten Förderstromes schließt sich im Endbereich des Rohrstückes (5) und einem angrenzenden Krümmungsbogen (6) an. In einem daran anschließenden senkrechten Auslaufstück (7) als vierter Zone findet nur noch eine Wassernacherhitzung bei geringer Heizleistungszufuhr statt.

EP 0 432 460 A1

## DURCHLAUFERHITZER, INSBESONDERE FÜR MASCHINEN ZUR HERSTELLUNG VON BRÜHGETRÄNKEN

Die Erfindung betrifft einen Durchlauferhitzer, insbesondere für Maschinen zur Herstellung von Brühgetränken, mit einem Wasserrohr und einem im Sinne einer Wärmeübertragung damit verbundenen Heizrohr.

Die bekannten Durchlauferhitzer der gattungsgemäßen Art sind bislang so konzipiert, daß das Heizrohr über seine ganze Länge längs des Wasserrohres auf eine konstante Heizleistung ausgelegt ist. Dies steht einerseits einem optimalen Wirkungsgrad entgegen und bewirkt andererseits eine hohe Wärmebelastung der üblicherweise in der Nähe des Heiz- und des Wasserrohres befindlichen Gehäuseteile. Auch die geometrische Form des Wasserrohres und damit des Heizungsrohres wie auch die entsprechende Raumlage im Gehäuse sind bislang nach den geometrischen Gegebenheiten der jeweiligen Gehäuse konzipiert, nicht aber nach einer Optimierung des Funktionsablaufes und damit des Wirkungsgrades.

Der vorliegenden Erfindung liegt von daher die Aufgabe zugrunde, einen Durchlauferhitzer der gattungsgemäßen Art zu schaffen, der einen erheblich verbesserten Wirkungsgrad sowohl bezüglich der Wassererhitzung wie auch bezüglich der Wasserförderung aufweist.

Die Erfindung besteht gemäß einer ersten Lösung darin, daß dem Heizrohr eine solche Leistungsverteilung gegeben ist, daß das Wasserrohr, vom Einlauf zum Auslauf, eine erste Zone starker Wassererhitzung bis unterhalb des Siedepunktes, danach eine zweite Zone geringer Wassererhitzung bis an den Siedepunkt, nachfolgend eine dritte Zone starker Erhitzung bis zu starker Dampfblasenbildung und schließlich eine vierte Zone geringerer Erhitzung zur Wassernacherhitzung aufweist.

Mit dieser Ausgestaltung ist erreicht, daß das ankommende kalte Wasser schnell auf relativ hohe Temperatur gebracht wird, die allerdings noch unterhalb des Siedepunktes liegt. Die hier eingesetzte erhebliche Energie geht voll in die Wassererhitzung. Eine Dampfblasenbildung beginnt im Regelfall noch nicht, so daß die Oberflächenbelastung der Rohre trotz des großen Energieeinsatzes auch gegen Ende dieser Zone noch gering ist.

In der anschließenden zweiten Zone wird dann mit einem geringeren Energieeinsatz gearbeitet und das Wasser bis an den Siedepunkt herangeführt. Dank dieser Vorgehensweise kommt es noch nicht zu einer übermäßig starken Dampfblasenbildung. Die sich bildenden Dampfblasen können sich noch von der Wasserrohrwandung entfernen und im Wasser unter Abgabe ihrer großen Wärme kondensieren. Es kommt, ohne übermäßige Oberflächenbelastung der beteiligten Rohre, bei sehr gutem Wärmeübergang von den Dampfblasen zum Wasser und bei relativ geringem Energieeinsatz zu einer Erhitzung des Wassers auf die Siedetemperatur.

In der dritten Zone erfolgt wieder eine kurze starke Wassererhitzung bis zu einer starken Dampfblasenbildung. In dieser dritten Zone wird praktisch die für den Durchlauferhitzer benötigte Förderwirkung erreicht. Die Dampfblasen bilden eine starke Strömung mit erheblicher Schubkraft. Aufgrund dieser Tatsache hält sich auch zumindest in Relation zur eingesetzten Heizleistung wiederum die Oberflächenbelastung der Rohre relativ gering. Die vierte Zone dient bei geringer Energiezufuhr nur der Nacherhitzung des jetzt den Durchlauferhitzer im Auslaufbereich verlassenden Wassers.

Eine weitere Lösung der eingangs genannten Aufgabe besteht gemäß der Erfindung darin, daß das Wasserrohr, vom Einlauf zum Auslauf, als erste Zone ein Einlaufstück mit einem anschließenden Krümmungsbogen aufweist, der in eine zweite Zone in Form eines mit ebenem Boden liegenden, in Draufsicht gekrümmt verlaufenden und dabei zum Auslauf hin schwach ansteigenden Rohrstückes übergeht, dessen Endbereich als dritte Zone in einen weiteren Krümmungsbogen übergeht, an den sich als vierte Zone ein senkrechtes Auslaufstück anschließt.

Mit einer derartigen Formgestaltung und räumlichen Anordnung der genannten Abschnitte des Wasserrohres läßt sich bereits der Wirkungsgrad eines derartigen Durchlauferhitzers erheblich verbessern. In der genannten ersten Zone sind die Formgebung und Raumgestaltung funktionell noch nicht von übermäßiger Bedeutung, da das Wasser, selbst wenn es zu Beginn relativ stark erhitzt wird, insgesamt gesehen noch relativ kalt ist.

Besonders wesentlich ist aber bei dieser Formgestaltung, daß die zweite Zone ein mit ebenem Boden liegendes, in Draufsicht gekrümmt verlaufendes und dabei zum Auslauf hin schwach ansteigendes Rohrstück ist. Die schwache Steigung begünstigt nämlich außerordentlich die Tendenz der sich in dieser Heizphase allmählich an der Wasserrohrwandung bildenden Dampfblasen, sich von der Rohrwandung abzulösen und damit in erhöhtem Umfang in das Wasser einzutreten und in diesem die erhebliche Wärme abzugeben. Dabei geschieht diese Dampfblasenbewegung in sehr zweckmäßiger Weise bereits durch die geringfügige Steigung des Rohrstückes zum Auslauf hin gezielt in der gewünschten Förderrichtung, insbesondere also nicht etwa rückwärtig in den Bereich des Einlaufes hinein und insbesondere nicht von dort dann zu dem üblicherweise zwischen dem Einlaufbereich und dem Wasserspeicher befindlichen Rückschlagventil.

Wesentlich ist dann auch, daß sich an den nachfolgenden Krümmungsbogen ein senkrechtes Auslaufstück anschließt. Das senkrechte Auslaufstück begünstigt außerordentlich die in diesem Bereich stattfindende Strömung im Durchlauferhitzer unter Wirkung der hier dann in erheblichem Umfang auftretenden Blasen. Der Strömungsvorgang unter gleichzeitig möglichst geringer Oberflächenbelastung des Wasserrohres wird durch die senkrechte Lage des Auslaufstückes insbesondere auch insoweit begünstigt, als sich das Strömungsprofil des Dampfblasenstromes immer zur Rohrmitte hin ausbildet, die Dampfblasen sich also hier stark konzentrieren und nicht an der Rohrwandung.

Die beiden vorstehend geschilderten Lösungen lassen sich problemlos miteinander kombinieren. In einem solchen Fall liegt eine Optimierung des Wirkungsgrades der Funktionsweise vor, da sich die angegebenen Maßnahmen in den genannten Zonen jeweils in sehr vorteilhafter Weise ergänzen und damit verstärken.

Es ist an dieser Stelle auch hervorzuheben, daß ein derartiger Durchlauferhitzer im Verhältnis zu den bislang üblichen deutlich geräuschärmer arbeitet, weil in der ersten Zone gar keine Dampfblasenbildung und in der zweiten Zone nur eine relativ geringe Dampfblasenbildung auftritt und demzufolge praktisch auch keine Dampfblasenrückwanderung hin zu dem genannten Rückschlagventil erfolgt.

Gemäß einer bevorzugten Ausgestaltung eines derartigen Durchlauferhitzers wird auch dem Einlaufstück des Wasserrohres eine senkrechte Raumlage gegeben. Dies hat den Vorteil, daß sich der Biegevorgang sehr viel einfacher gestalten läßt und daß insbesondere die Montage eines derartigen Durchlauferhitzers selbst in einem gehäuseseitig vorgesehenen Halter sowie die Bestückung der Enden des Durchlauferhitzers mit Einlauf- und Auslaufrohren, Dichtungsstücken und dergleichen sowie insgesamt die Gehäusemontage in diesem Bereich durch eine lineare, leicht zu automatisierende Montagebewegung durchführen läßt.

Weitere bevorzugte Ausgestaltungen sind in den Unteransprüchen gekennzeichnet. Sie kennzeichnen insbesondere zweckmäßige Ausgestaltungen angrenzender Gehäusebereiche, insbesondere Halter zur Aufnahme und Lagerung des Wasser- und Heizungsrohres in der gewünschten Raumlage.

Ein bevorzugtes Ausführungsbeispiel eines Durchlauferhitzers gemäß der Erfindung wird nachstehend unter Bezugnahme auf die Zeichnung näher beschrieben.
Es zeigen

Figur 1    ein Wasser- und Heizrohr eines Durchlauferhitzers gemäß der Erfindung in Seitenansicht mit schaubildlicher Darstellung der differenzierten Leistungsverteilung im Heizrohr,

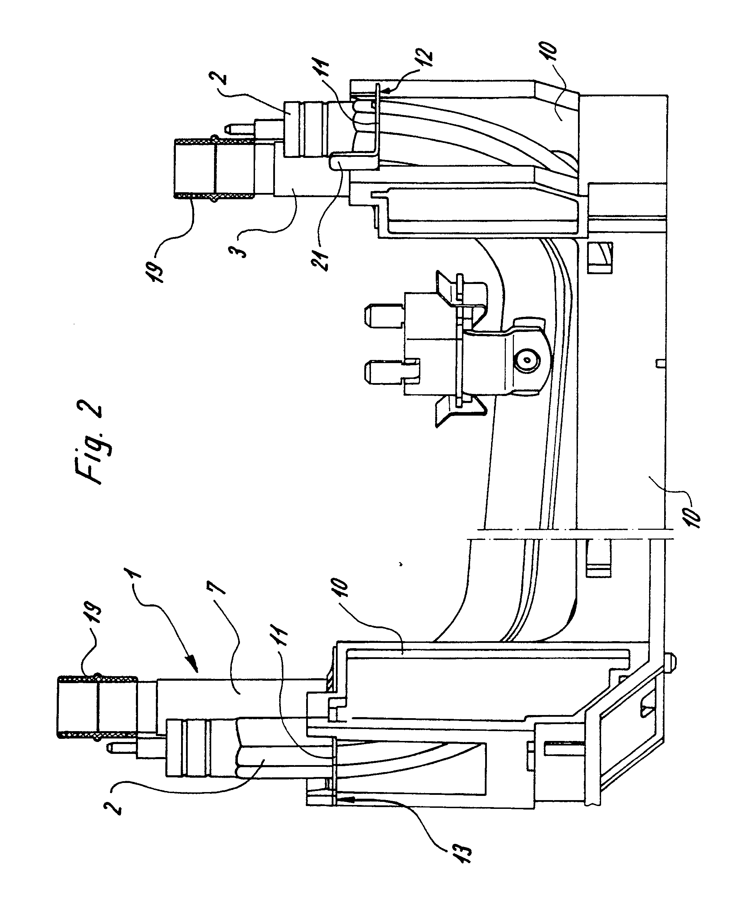

Figur 2    eine Teil-Seitenansicht des Durchlauferhitzers mit einer Aufnahme und der Verankerung des Wasser- und Heizungsrohres in der Aufnahme,

Figur 3    eine Teildraufsicht auf die Anordnung nach Figur 2.

Der Durchlauferhitzer besteht im wesentlichen aus einem Wasserrohr 1, mit dem im Sinne einer Wärmeübertragung ein Heizrohr 2 wärmeleitend verbunden ist.

Von der geometrischen Formgestaltung her hat das Wasserrohr 1, gesehen vom Einlauf hin zum Auslauf, eine erste Zone bestehend aus einem in der Gebrauchslage senkrecht liegenden Einlaufstück 3 mit einem daran anschließenden Krümmungsbogen 4. Der Krümmungsbogen 4 geht in eine zweite Zone in Form eines mit ebenem Boden liegenden, zum Auslauf hin jedoch schnell ansteigenden Rohrstückes 5 über. Der Steigungswinkel zum Auslauf hin kann beispielsweise bei ca. 90° liegen.

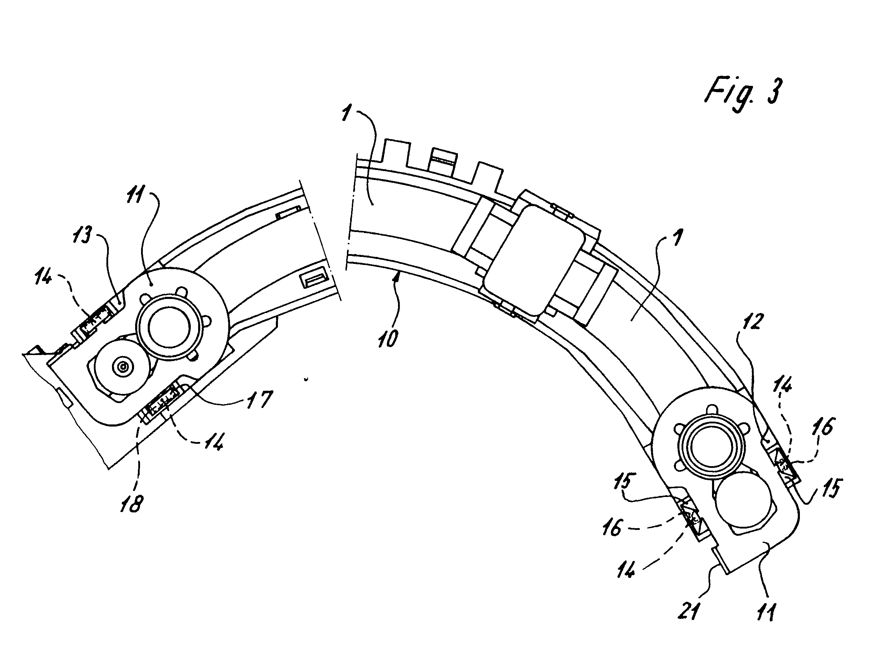

Dieses Rohrstück 5 kann dabei darüber hinaus, wie insbesondere aus Figur 3 ersichtlich, in Anpassung an gehäusemäßige Gegebenheiten auch noch in Form eines Bogenabschnittes gekrümmt sein. Der Endbereich des Rohrstückes 5 geht als dritte Zone in einen weiteren Krümmungsbogen 6 über. An diesen schließt sich als vierte Zone ein wiederum in der Gebrauchslage senkrecht stehendes Auslaufstück 7 an.

Das Heizrohr 2 hat einen der Geometrie des Wasserrohres 1 entsprechenden Verlauf.

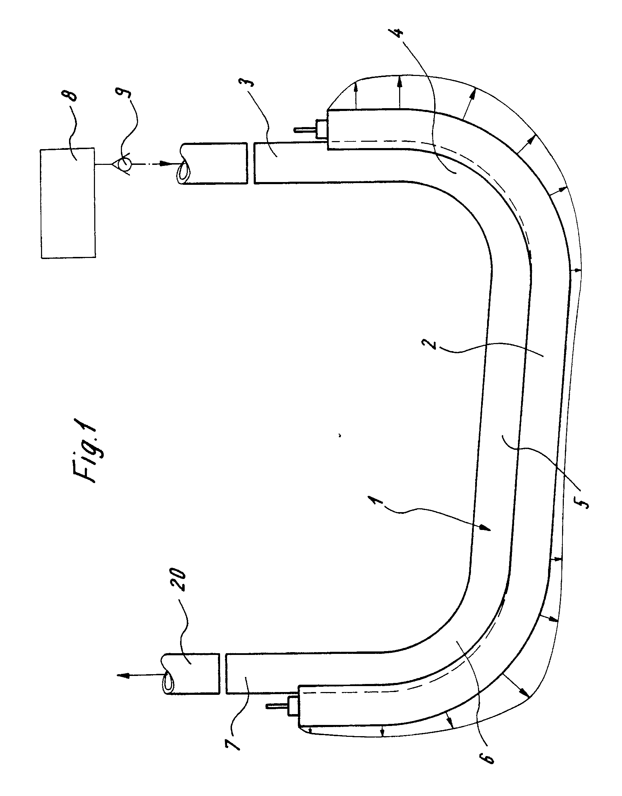

Neben der dargestellten Formgestaltung des Durchlauferhitzers, deren funktionelle Bedeutung nachfolgend noch im einzelnen beschrieben wird, hat ferner das Heizrohr 2 eine erfindungsfunktionelle differenzierte Leistungsauslegung, die in Figur 1 schaubildartig dadurch illustriert ist, daß über das Heizungsrohr eine Kurve des ihm innewohnenden Leistungsgrades seiner unterschiedlichen Erstreckungszonen aufgetragen ist, wobei der größere Abstand der Leistungsgradkurve vom Heizungsrohr jeweils den höheren Leistungsgrad illustriert.

Wie sich aus dem Schaubild entsprechend Figur 1 ergibt, ist dem Heizrohr 2 über seinem Verlauf vom Einlauf zum Auslauf etwa folgende Leistungsgraddifferenzierung gegeben: In einer ersten Zone, etwa entsprechend dem senkrechten Einlaufstück 3 und dem ersten Krümmungsbogen 4 des Wasserrohres, hat das Heizrohr 2 einen hohen Leistungsgrad, so daß das Wasserrohr entsprechend hier eine erste Zone einer starken Wassererhitzung hat, die das ankommende Wasser rasch deutlich, aber noch bis unterhalb des Siedepunktes, erhitzt. Die aufgebrachte beträchtliche Heizleistung geht vollständig in die Erwärmung des Wassers. Im Hinblick darauf, daß das Wasser kalt einläuft, findet eine Dampfblasenbildung in dieser Zone noch nicht statt. Das Einlaufstück 3 kann von der Funktion her auch waagerecht liegen.

Das Heizrohr 2 hat an die erste Zone anschließend eine weitere Zone relativ geringen Leistungsgrades, etwa entsprechend der zweitgenannten Zone des Wasserrohres 1, also dem Beginn des mit ebenem Boden liegenden, zum Auslauf hin leicht ansteigenden Rohrstückes 5 bis in den Endbereich dieses Rohrstückes 5. Hierdurch hat das Wasserrohr in der genannten Zone also eine relativ geringe Leistungszufuhr, die jedoch ausreicht, die Wassererhitzung im Wasserrohr an den Siedepunkt zu bringen. In dem Rohrstück 5 beginnt somit eine Dampfblasenbildung, die naturgemäß an der dem Heizrohr 2 zugewandten Rohrwandung des Wasserrohres, genauer gesagt des Rohrstückes 5, beginnt. Die hier aufgebrachte Heizleistung dient wiederum im wesentlichen nur der Erhitzung des Wassers bis zum Siedepunkt, und zwar wiederum mit hohem Wirkungsgrad, da infolge der leichten Steigungslage des Rohrstückes 5 hin zum Auslauf den Dampfblasen an der Rohrwandung des Rohrstückes 5 die Neigung und Tendenz gegeben wird, sich umgehend von der Rohrwandung zu lösen, also in das Wasser im Rohrstück 5 hineinzusteigen und dort unter Kondensieren ihre hohe Wärme abzugeben, während andererseits dadurch die spezifische Oberflächenbelastung des Wasserrohres selbst, infolge des umgehenden Ablösens der Dampfblasen, gering bleibt. Von Vorteil ist auch, daß der beginnende kleine Bewegungsstrom der Dampfblasen bereits in die gewünschte Förderrichtung, also zum Auslauf hin, verläuft und daß diese erste beginnende Dampfblasenbewegung insbesondere nicht etwa zurück über den Krümmungsbogen 5 und das Einlaufstück 3 hin quasi rückwärts erfolgt. Üblicherweise befindet sich in der Brühmaschinezwischen dem Einlaufstück 3 des Durchlauferhitzers und dem in Figur 1 angedeuteten Wasserspeicher 8 ein ebenfalls angedeutetes Rückschlagventil 9. Dadurch, daß insbesondere dieses Rückschlagventil 9 nun nicht mehr mit Dampfblasen belastet wird, arbeitet es geräuschfrei. Die Neigung zum Aufbau von Mineral- bzw. Korkschichten ist deutlich verringert. Die weitere Leistungsgradverteilung des Heizrohres 2 beinhaltet angrenzend an die vorstehend geschilderte zweite Zone eine dritte Zone hohen Leistungsgrades entsprechend einer starken Erhitzung des Wassers im Wasserrohr 1. Diese Zone beginnt im Endbereich des Rohrstückes 5 und betrifft insbesondere den zweiten Krümmungsbogen 6 bis in das senkrechte Auslaufstück 7. In dieser dritten Zone starker Wassererhitzung kommt es zu einer starken Dampfblasenbildung und damit zur Erzielung der erforderlichen Förderleistung für den Durchlauferhitzer. In der anschließenden vierten Zone geringer Erhitzung längs des senkrechten Auslaufstückes 7 wird nur soviel Heizleistung zugeführt, wie zur Wassernacherhitzung erforderlich ist.

Da die Dampfblasen immer in die stärkste Strömungszone wandern, stellt sich aufgrund der senkrechten Stellung des Auslaufstückes 7 in diesem eine Strömung ein mit einem Strömungsprofil dergestalt, daß die Dampfblasen zur Rohrmitte hin wandern. Auch dies führt zusätzlich zur Erzielung der gewünschten Förderleistung zu einem sehr guten Wärmeübergang auch noch in diesem Abschnitt des Durchlauferhitzers, so daß mit nur geringer Energiezufuhr die Wassernacherhitzung zu erreichen ist und auch in dieser Zone die spezifische Oberflächenbelastung des Wasserrohres relativ gering bleibt.

Sowohl die geschilderte differenzierte Leistungsgradverteilung über das Heizrohr einerseits wie die geschilderte geometrische Ausgestaltung des Wasserrohres andererseits bewirken für sich genommen jeweils eine erhebliche Verbesserung des Wirkungsgrades des Durchlauferhitzers. In der Kombination der Maßnahmen kann von einer Optimierung gesprochen werden.

Aus den genannten Gründen arbeitet der Durchlauferhitzer auch geräuscharm und es kommt zu einer relativ geringen Wärmebelastung umgebender Teile im Gehäuse der Maschine oder des Gerätes, das mit einem solchen Durchlauferhitzer versehen ist.

Dem im wesentlichen aus dem Wasserrohr 1 und dem Heizrohr 2 gebildeten Durchlauferhitzer ist ferner ein Aufnahmeteil 10 zugeordnet, das dazu dient, den Rohren in dem Gerät oder der Maschine, beispielsweise einer Maschine zur Zubereitung von Brühgetränken, die gewünschte Raumlage zu geben und die Rohre sicher in dieser zu halten. Das Aufnahmeteil 10 hat des weiteren die Funktion einer thermischen Isolierung gegenüber benachbarten Begrenzungswänden des Gehäuses und weiterer Funktionsteile einer derartigen Maschine und besteht von daher zweckmäßig aus einem entsprechende Isolationseigenschaften aufweisenden Kunststoff.

Aufgrund der Tatsache, daß sowohl das Einlaufstück 3 wie auch das Auslaufstück 7 eine senkrechte Raumlage haben, ergibt sich neben der Möglichkeit einer relativ einfachen Herstellung im Zusammenhang mit dem Biegen der Rohre 1 und 2 die Möglichkeit, wesentliche Montagevorgänge sowohl des Durchlauferhitzers wie der mit ihm zu verbindenden Teile mit linearen Montagebewegungen durchzuführen, die eine automatische Fertigung wesentlich erleichtern. Die nachfolgend geschilderten Konstruktionsteile und deren entsprechende Ausgestaltung tragen mit zur Verwirklichung einer derartig verwirklichten einfachen Montage bei.

So sind über das senkrechte Einlaufstück 3 des Wasserrohres 1 und den entsprechenden senkrechten Abschnitt des Heizrohres 2 sowie über das senkrechte Auslaufstück 7 des Wasserrohres 1 und den entsprechenden Abschnitt des Heizrohres 2 jeweils Halteklammern 11 geklemmt, und zwar im Verhältnis zueinander auf der Einlaufseite und der Auslaufseite jeweils in identischer Höhenlage. Im Bereich der hier im wesentlichen interessierenden Endzonen des Aufnahmeteiles 10 sind Auflagen 12 und 13 für wesentliche Flächenbereiche der Halteklammern 11 gebildet. Die Halteklammern 11 haben ferner jeweils auf zwei einander gegenüberliegenden Seiten seitliche Rastlaschen 14.

Im Bereich des einlaufseitigen Auflagers 12 am Aufnahmeteil 10 befinden sich Haken 15, unter die die entsprechenden Halteklammern 11 in einer senkrechten Montagebewegung geschnappt werden können. In den Haken 15 befinden sich paßgerechte Aufnahmen 16 für die Rastlaschen 14 der Halteklammern 11. Auf diese Weise ist im Bereich der Einlaufseite des Durchlauferhitzers praktisch ein Festlager zwischen den Rohren 1 und 2 und dem Aufnahmeteil 10 gebildet, das seinerseits paßgerecht am Gehäuse fixiert sein kann. Dieses Festlager ist der Orientierungspunkt für die Montagebewegungen. Dieses Festlager befindet sich zweckmäßig dort, wo der Durchlauferhitzer relativ kalt ist.

Auch dem Auflager 13 des Aufnahmeteiles 10 auf der Auslaufseite sind Haken 17 zugeordnet, unter die die dortige entsprechende Halteklammer 11 in einer senkrechten Montagebewegung geschnappt werden kann. Die Haken 17 haben Aufnahmen 18 für die Rastlaschen 14, die im Sinne eines Loslagers Spiel haben, dergestalt, daß Wärmedehnungen des im Betrieb befindlichen Durchlauferhitzers im Verhältnis zu seinem Aufnahmeteil 10 ohne weiteres aufgenommen werden können.

In weiterer zweckmäßiger Ausgestaltung sitzen auf den oberen freien Enden des Einlaufstückes 3 und des Auslaufstückes 7 des Wasserrohres 1 jeweils paßgerechte Dichtungsstutzen 19. In den Dichtungsstutzen 19 auf der Auslaufseite kann, wiederum in einer senkrechten Montagebewegung, das in Figur 1 mit illustrierte Steigrohr 20 gesteckt werden. Dank dieser Ausgestaltung ist es möglich, praktisch das gesamte Oberteil des Gehäuses, beispielsweise einer Maschine zur Herstellung von Brühgetränken, vormontiert über das vormontierte Unterteil zu setzen. Da das einlaufseitig definierte Festlager in dieser Zone eine exakte Montagezuführung ermöglicht, kann hier im Rahmen einer automatischen Montagebewegung ein Wasserzuleitungsrohr, das von dem Wasserspeicher 8 (siehe Figur 1) kommt, direkt auf den Dichtungsstutzen 19 eingeführt werden.

Man kann in diesem Bereich damit schlauchlos arbeiten. Das flexibel zu haltende Steigrohr kann danach an einen Brühwasserspender angeschlossen werden.

In weiterer zweckmäßiger Ausgestaltung kann den Halteklammern 11 eine weitere Funktion zugeordnet werden. Gestaltet man sie aus elektrisch leitendem Metall, können sie, beispielsweise mittels einer angebogenen Lasche 21, zugleich auch als Masseanschluß dienen.

Die eingangs geschilderte differenzierte Leistungsgradzuordnung im Verlauf des Heizrohres 2 kann auf unterschiedliche Weise verwirklicht werden. So ist es möglich, der im Heizrohr 2 befindlichen Heizwendel über den Verlauf des Heizrohres 2 gesehen jeweils die entsprechenden unterschiedlichen Steigungen zu geben. Es ist ferner möglich, dem Heizwendeldraht entsprechend dem gewünschten Leistungsgrad unterschiedliche Durchmesser zu geben. Schließlich ist es auch möglich, mit unterschiedlichen Wickeldurchmessern der Heizwendel zu arbeiten. Zur Erzielung der gewünschten Leistungsgraddifferenzierung kann auch mit Kombinationen der vorstehend genannten Maßnahmen gearbeitet werden.

Es ist ferner möglich, zur Erreichung der gewünschten Leistungsgraddifferenzierung das Heizrohr abschnittsweise mit Materialien unterschiedlicher Wärmeleitfähigkeit zu befüllen, also beispielsweise mit einem keramischen Material in jeweils bezüglich der Wärmeleitfähigkeit unterschiedlichen Modifikationen. Derartige Füllmaterialien werden durch die Verformung des Mantelrohres verpreßt. Man kan abschnittsweise unterschiedliche Wärmeleitfähigkeiten auch durch eine unterschiedlich starke Verpressung des Füllmateriales erreichen.

## Ansprüche

1. Durchlauferhitzer, insbesondere für Maschinen zur Herstellung von Brühgetränken, mit einem Wasserrohr (1) und einem im Sinne einer Wärmeübertragung damit verbundenen Heizrohr (2), **dadurch gekennzeichnet,** daß dem Heizrohr (2) über seinen Verlauf eine solche Heizleistungsverteilung gegeben ist, daß das Wasserrohr (1), vom Einlauf zum Auslauf gesehen, eine erste Zone starker Wassererhitzung bis unterhalb des Siedepunktes, danach eine zweite Zone geringerer Wassererhitzung bis an den Siedepunkt, nachfolgend eine dritte Zone starker Wassererhitzung bis zu starker Dampfblasenbildung und schließlich eine vierte Zone geringerer Erhitzung als Wassernacherhitzung aufweist.

2. Durchlauferhitzer nach Anspruch 1, dadurch gekennzeichnet, daß die differenzierte Heizleistungsverteilung im Heizrohr (2) durch unterschiedliche Steigungen der im Heizrohr (2) befindlichen Heizwendel verwirklicht ist.

3. Durchlauferhitzer, insbesondere für Maschinen zur Herstellung von Brühgetränken, mit einem Wasserrohr und einem im Sinne einer Wärmeübertragung damit verbundenen Heizrohr, insbesondere nach Anspruch 1, dadurch gekennzeichnet, daß das Wasserrohr (1), vom Einlauf zum Auslauf hin, als erste Zone ein Einlaufstück (3) mit einem daran anschließenden Krümmungsbogen (4) aufweist, der in eine zweite Zone in Form eines mit ebenem Boden liegenden, in Draufsicht gekrümmt verlaufenden und dabei zum Auslauf hin schwach ansteigenden Rohrstück (5) übergeht, dessen Endbereich als dritte Zone in einen weiteren Krümmungsbogen (6) übergeht, an den sich als vierte Zone ein senkrechtes Auslaufstück (7) anschließt.

4. Durchlauferhitzer nach Anspruch 3, dadurch gekennzeichnet, daß auch das Einlaufstück (3) eine senkrechte Raumlage hat.

5. Durchlauferhitzer nach Anspruch 3, dadurch gekennzeichnet, daß das Rohrstück (5) der zweiten Zone des Wasserrohres (1) zum Auslauf hin eine Steigung von ca. 5° aufweist.

6. Durchlauferhitzer nach Anspruch 1 und/oder 3, dadurch gekennzeichnet, daß das Wasser- und Heizungsrohr (1 und 2) mit senkrechtem Einlaufstück (3) und senkrechtem Auslaufstück (7) und mit zum Auslauf hin leicht ansteigendem liegenden Rohrstück (5) in einem Aufnahmeteil (10) festgelegt ist.

7. Durchlauferhitzer nach Anspruch 6, dadurch gekennzeichnet, daß das Aufnahmeteil (10) aus einem thermisch isolierenden Kunststoff besteht.

8. Durchlauferhitzer nach Anspruch 6, dadurch gekennzeichnet, daß auf dem Einlaufstück (3) des Wasserrohres (1) und dem dort befindlichen Heizrohrabschnitt (2) sowie auf dem Auslaufstück (7) des Wasserrohres (1) und dem dort befindlichen Heizrohrabschnitt (2) jeweils in gleicher Höhenlage Halteklammern (11) fixiert sind, für die ihrerseits an dem Aufnahmeteil (10) einlauf- und auslaufseitig Halterungen (12, 13; 15, 16; 17, 18) gebildet sind.

9. Durchlauferhitzer nach Anspruch 8, dadurch gekennzeichnet, daß die Halterung der Halteklammer (11) einlaufseitig als Festlager, auslaufseitig als Loslager ausgebildet ist.

10. Durchlauferhitzer nach einem der Ansprüche 6, 8 und 9, dadurch gekennzeichnet, daß das Aufnahmeteil (10) einlaufseitig ein Auflager (12) für die Halteklammer (11) aufweist, dem die Halteklammer (11) schnappend übergreifende Haken (15) zugeordnet sind, in denen sich paßgerechte Aufnahmen (16) für seitlich an den Halteklammern (11) vorstehende Rastlaschen (14) befinden.

11. Durchlauferhitzer nach einem der Ansprüche 6, 8 und 9, dadurch gekennzeichnet, daß das Aufnahmeteil (10) auslaufseitig ein Auflager (13) für die betroffene Halteklammer (14) aufweist, dem Haken (17) zugeordnet sind, die die Halteklammer (11) schnappend übergreifen und in denen sich Aufnahmen (18) befinden, in denen seitlich an der Halteklammer (11) vorgesehene Rastlaschen (14) mit Spiel aufgenommen sind.

12. Durchlauferhitzer nach Anspruch 8, dadurch gekennzeichnet, daß die Halteklammern (11) aus elektrisch leitendem Material bestehen und an ihnen Anschlußlaschen (21) angeformt sind.

13. Durchlauferhitzer nach einem oder mehreren der vorhergehenden Ansprüche, dadurch gekennzeichnet, daß auf das obere Ende des Einlaufstückes (3) sowie des Auslaufstückes (7) des Wasserrohres (1) paßgerechte Dichtungsstutzen (19) gesetzt sind.

14. Durchlauferhietzer nach Anspruch 1 oder 2, dadurch gekennzeichnet, daß die differenzierte Heizleistungsverteilung im Heizrohr (2) durch unterschiedliche Durchmesser des Heizwendeldrahtes verwirklicht ist.

15. Durchlauferhitzer nach Anspruch 1 oder 2 oder 14, dadurch gekennzeichnet, daß die differenzierte Heizleistungsverteilung im Heizrohr (2) durch unterschiedliche Wickeldurchmesser der Heizwendel verwirklicht ist.

16. Durchlauferhitzer nach Anspruch 1, dadurch gekennzeichnet, daß die differenzierte Heizleistungsverteilung im Heizrohr (2) durch eine Befüllung mit Materialien unterschiedlicher Wärmeleitfähigkeit verwirklicht ist.

17. Durchlauferhitzer nach Anspruch 16, dadurch gekennzeichnet, daß das Heizrohr (2) mit keramischem Material jeweils verschiedener Modifikation befüllt ist.

18. Durchlauferhitzer nach Anspruch 16, dadurch gekennzeichnet, daß das Heizrohr (2) mit einem keramischen Material befüllt ist, das entsprechend der differenzierten Heizleistungsverteilung unterschiedlich stark verpreßt ist.

*Fig.1*

EP 0 432 460 A1

Fig. 2

EP 0 432 460 A1

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | DE-U-8 905 005   (SIEMENS AG)<br>* das ganze Dokument *<br>— — — | 1,2,3,4,6,<br>13,14,16 | A 47 J<br>31 54<br>F 24 H 1 14 |
| Y,A | GB-A-2 062 823   (NV PHILIPS' GLOEILAMPENFABRIE-KEN)<br>* das ganze Dokument *<br>— — — | 3,4,6,13,<br>14,1,2,5 | |
| Y | FR-A-2 241 760   (METZELER GUMMITECHNIK GMBH)<br>* Seite 3, Zeilen 11 - 25 * * Seite 4, Zeilen 4 - 16; Figuren *<br>— — — | 16 | |
| A | EP-A-0 162 958   (SIEMENS AG)<br>* das ganze Dokument *<br>— — — | 1,2 | |
| A | US-A-2 680 802   (BREMER ET AL)<br>* Spalte 4, Zeile 42 - Spalte 6, Zeile 11; Figuren 4-6 *<br>— — — | 1,15 | |
| A | GB-A-1 151 214   (URQUHART'S LTD)<br>* Seite 2, Zeilen 4 - 56; Figuren 1, 2 *<br>— — — — — | 17,18 | |

| RECHERCHIERTE SACHGEBIETE (Int. Cl.5) |
|---|
| A 47 J<br>F 24 H<br>H 05 B |

Der vorliegende Recherchenbericht wurde für alle Patentansprüche erstellt

| Recherchenort | Abschlußdatum der Recherche | Prüfer |
|---|---|---|
| Den Haag | 07 März 91 | BODART P.A. |